Europäisches Patentamt

(19) European Patent Office   ·   (11) Publication number: **0 200 726**
                                                              **B1**
Office européen des brevets

(12)   # EUROPEAN PATENT SPECIFICATION

(45) Date of publication of patent specification: **09.05.90**   (51) Int. Cl.⁵: **B 29 C 65/18**

(21) Application number: **84904282.5**

(22) Date of filing: **08.11.84**

(86) International application number:
   **PCT/US84/01822**

(87) International publication number:
   **WO 86/02876 22.05.86 Gazette 86/11**

(54) **METHOD AND APPARATUS FOR THERMOBONDING SEAMS IN THERMOPLASTIC MATERIAL.**

(30) Priority: **07.11.84 US 669305**

(43) Date of publication of application:
   **12.11.86 Bulletin 86/46**

(45) Publication of the grant of the patent:
   **09.05.90 Bulletin 90/19**

(84) Designated Contracting States:
   **AT BE CH DE FR GB LI NL SE**

(56) References cited:
   **DE-A-1 213 596**
   **DE-A-1 604 551**
   **FR-A-1 226 208**
   **FR-A-2 482 898**
   **GB-A-1 063 119**
   **US-A-1 497 592**
   **US-A-1 540 872**
   **US-A-2 589 756**
   **US-A-2 963 072**
   **US-A-2 994 361**
   **US-A-3 303 255**
   **US-A-3 536 568**
   **US-A-4 555 293**

(73) Proprietor: **FRENCH, Robert, C.**
   **22845 Willard**
   **El Toro, CA 92630 (US)**

(72) Inventor: **FRENCH, Robert, C.**
   **22845 Willard**
   **El Toro, CA 92630 (US)**

(74) Representative: **MacGregor, Gordon et al**
   **ERIC POTTER & CLARKSON 14 Oxford Street**
   **Nottingham, NG1 5BP (GB)**

Courier Press, Leamington Spa, England.

# Description

The present invention concerns a novel apparatus for heat sealing thermoplastic materials which heretofore have been difficult to seal.

## Background art

Many synthetic cloth-like materials are available on the market. The synthetic materials are made of thermoplastic and formed as woven and non-woven types. Some of these synthetic cloths include materials generally known as "Tyvek," which is a trademark of E. I. DuPont de Nemours & Co., Wilmington, Delaware 19898; "Duraguard" and "Safeguard," which are trademarks of Kimberly-Clark Corporation, Roswell, Georgia 30076; "Celestra," which is a trademark of Crown Zellerbach Corporation, Washougal, Washington 98671; and "Duralace," which is a trademark of Chicopee Manufacturing Co., Chicopee, Georgia 30501. These materials are utilized as substitutes for cloth and pulp-paper in items such as envelopes and disposable clothes for medical, industrial and retail markets. Many such applications require that the material be joined at a seam, and in this respect some difficulty is encountered in the prior art.

In the prior art, the seams in the material for forming, for example, disposable coveralls, are often formed by sewing it much like cloth, or by using adhesive, including heat-sensitive adhesives. Sewing of the material causes pinholes which makes the completed item of clothing undesirable for use in dust-free and sterilized environments. Use of adhesives to form bonding requires special adhesives and complicates the manufacturing procedure. Furthermore, it is difficult to obtain a good seal bond along a seam by using adhesives.

Various heat seal methods have been attempted, but they have not proved to be satisfactory. In many instances the seal obtained exhibits a "zipper" effect, in that the seal has random intermittent breaks or weak points which affect the quality of the seal at the seam.

## Summary of the invention

It is an object of the present invention to provide a heating and press die arrangement for forming seam seals free of "zipper" effect in sheets of thermoplastic material.

It is another object of this invention to control the size and shape of the seam seal by selecting the proper dimensions for a heating element in one of the die members, and for a recess in the other die member; and by correlating these dimensions to the thickness and compression of the thermoplastic sheet material.

It is still another object of the invention to form two adjacent seals, side by side, with a crimped or tear region therebetween, or to form edge joints or intermittent joints.

Another object of the invention is to relieve the stress between the seam seal and the seal-material interface to provide a more secure and strong bond.

A further object of the invention is to allow confined material to be heated from different directions, simultaneously or independently.

A still further object of the invention is to form a uniform seal bond by controlling the humidity at the work-station, the pressure applied to the confined material and the duration thereof, and the heat supplied and the duration thereof.

GB—A—1063119 discloses a device for sealing thermoplastic materials comprising pressure applying means for applying pressure on the thermoplastic material to be sealed, support means for supporting the thermoplastic material to be sealed, a heat element for forming the seal, said pressure applying means and said heat element being normally spaced to permit introduction of thermoplastic material therebetween but being operable for pressure engagement to provide thermal sealing of the material, and means for energizing said heat element for providing heat to the thermoplastic sheets while said pressure applying means and said heat element are in pressure engagement.

The present invention is characterised in that at least one of said pressure applying means and heat element has a recessed wall and the other of said pressure applying means and heat element has a non-planar surface, whereby a confined melt zone volume is defined between the pressure applying means and the heat element in the pressure engagement position and melted thermoplastic is forced to flow into and be confined within the melt zone.

The melt zone is the region within which melted portions of the thermoplastic material can accumulate and confined to form a seal. It is also a region that serves to relieve the stress between the seal and the material interface.

If two melt zones are provided, a crimping region may be provided between them. At the crimping region a greater pressure is applied to cause a "draw down" (i.e., pull) of the material into neighboring melt zone means to form a tear.

If a crimping region is not desired, a round or flat ribbon with its ends rounded may be used as a heating element. The region of the rounded ends of the flat ribbon serves as the stress relieving region which relieves the stress between the melt and the melt-material interface. With the round wire as the heating element the dimensions of the recess means is selected to avoid the pressure bearing crimping zone.

The support plate and pressure plate means may be provided with insulating material which may optimally be slightly resilient to aid in clamping the sheets of the material therebetween. If the insulating material is formed as a Teflon-impregnated fiberglass in the recess means, it would act as flow channel to control the melt flow of the material.

The length of heat element means may be contoured to form different shapes, for example, a glove. For such purposes, the cross-section of the heat element means may have a support portion to anchor it, and an outer exposed portcon comprising an elongated member with rounded edges.

The heat element means may be configured to provide only an edge joint, lap joint, butt joint, intermittent lap, or intermittent edge joints.

The heat element means may be directly heated, i.e., it may comprise an electrically heated wire, or be indirectly heated through heating means imbedded adjacent thereto.

The recess means may be split, i.e., formed as first and second recess means, each configured to mate with only a portion of the heat element means. With this configuration the crimping zone is absent, and the result is two neighboring bond seals (they may be parallel, but that is not essential).

In forming a glove it has been discovered that if the top and the bottom of the glove are equal in size, the bottom will fit improperly and there will be substantial folding in the underside of the hand when the glove is worn. In order to alleviate this problem, two sheets of thermoplastic material are conveyed, in overlying relationship, to a mold formed of pressure means for applying pressure on one side of the sheets and a heat element that is provided on the other side of the sheets. The heat element is provided in a longitudinal configuration of the desired glove to be formed. The pressure means defines a cavity therein, with the cavity opening facing the heat element. During operation of the pressure means and the heat element on the sheets of thermoplastic material, air is evacuated from the cavity to draw a portion of one of the sheets into the cavity. The sheet that is drawn into the cavity is the top of the glove. In this manner, the top of the formed glove will have a greater thermoplastic material area than the bottom of the formed glove.

This apparatus, utilizing a pressure means defining a cavity for drawing one of the sheets therein, is also applicable to other garments wherein one layer is intended to be unequal in size to the other layer. An air jet may be applied to the other side of the material being vacuum-drawn into the cavity in order to prevent overlapping and wrinkling.

The above heat element means and the recess means may be made in various sizes and shapes for thermoplastic sheets of different thickness, fabrication characteristic, and seam seal bond desired. With the proper heat element means and recess means, a good seam seal bond (i.e., one devoid of "zipper" effects) may be obtained by controlling the following factors:

a) the humidity (H) of the work station (assuming that the material is at substantially similar humidity). Preferably H should be between about 27 and about 52 percent.

b) pressure (P) applied on the recess means when it is in mating relationship with the heat element means with the seam edge of the material clamped therebetween. Preferably P should be between about 20 and about 60 p.s.i.

c) initial temperature setting (T) of the heat element means. Preferably T should be between about 58°F and about 72°F.

d) raising the temperature of the heat element means to a range between a high ($t_h$) and a low ($t_1$). Preferably $t_h$ should be about 340°F. and $t_1$ should be about 125°F.

e) time period ($h_t$) of supplied heat, i.e., the time during factor (d) above is active. Preferably $h_t$ should be between about 0.38 seconds and about 5.51 seconds.

f) dwell time "d", for which factor (e) above is active plus time thereafter that the pressure factor (b) above is continued. In other words, dwell time "d" is the time period during which pressure P is applied.

The various materials with which the above method may be practiced are those similar to DuPont's 1085, Tyvek (1444A, 1445A and 1443R); Kimberly-Clark's Safeguard and Duraguard; Chicopee's Duralace, and American Converter's Evolution.

The invention can be better understood by referring to the drawings and the detailed description.

Brief description of the drawings

Figure 1 is an elevational view of an arrangement of a die press containing the heat element to form seams.

Figure 2 is a sectional view along line x—x of Figure 1 showing various parts of the present invention.

Figure 3a is an arrangement showing the mating relationship of the device of Figure 2 and the melt zone means.

Figure 3b is part of Figure 3a showing the melt region and the melt-material interface.

Figure 4 shows a perspective view of a seam seal formed by the apparatus of Figures 2 and 3.

Figure 5a is a sectional view along line x—x of Figure 1 showing another embodiment of the melt zone means.

Figure 5b is Figure 5a showing the melt region and the melt-material interface of the thermoplastic sheets.

Figures 6a—6d are sectional view along line x—x of Figure 1 showing a different embodiment of the melt zone means. It also shows split recess means.

Figure 7 is still another embodiment of the melt zone means.

Figure 8 is a perspective view of two sheets of the material with a dual seam.

Figure 9a is another embodiment of heat element means and recess means for forming a single edge joint.

Figure 9b is a perspective view of an edge seal.

Figure 10a is a sectional view along line x—x of Figure 1 showing a flat ribbon heat element means.

Figure 10b is a perspective view of the joint formed by Figure 10a.

Figures 10c—10d are sectional views along x—x of Figure 1 showing a flat ribbon used to obtain dual seals.

Figure 11a is a perspective view showing an intermittent edge joint.

Figure 11b is a perspective view showing an intermittent lap joint.

Figures 12a and 12b are views of the heat element means showing its arrangement for forming intermittent joints.

Figure 12c is a side view of the recess means showing its arrangement for forming intermittent joints.

Figure 13 is a sectional view along line x—x of Figure 1 showing heat element means particularly configured for seals having sharp bends.

Figure 14 is a top view of the heat element means configured as a glove.

Figure 15 is a diagrammatic perspective view of an apparatus for forming a glove from two sheets of thermoplastic material in accordance with the principles of the present invention.

Figure 16 is a perspective view of a glove formed by the apparatus of Figure 15.

Figure 17 is a partially broken cross-sectional view of the mold of the apparatus of Figure 1, shortly prior to thermobonding of the two sheets of thermoplastic material.

Figure 18 is a view during thermobonding of the two sheets of thermoplastic material.

Figure 19 is a greatly enlarged view of a portion of Figure 18, showing the pressure means and heat element operating on the sheets of thermoplastic material.

Figure 20 is a cross-sectional view of the thermobonded glove, taken along the plane of the line 20—20 of Figure 16.

Figure 21 is a cross-sectional view of a glove with lining formed using the apparatus of Figure 15.

Description of the preferred embodiment

Initially it should be understood that the term "melt" used herein is intended to mean the state of the thermoplastic material where it plasticizes, and cross-linking between different layers occurs to where they are amenable to be bonded together. "Melt" for purposes of this disclosure does not require that the material liquify.

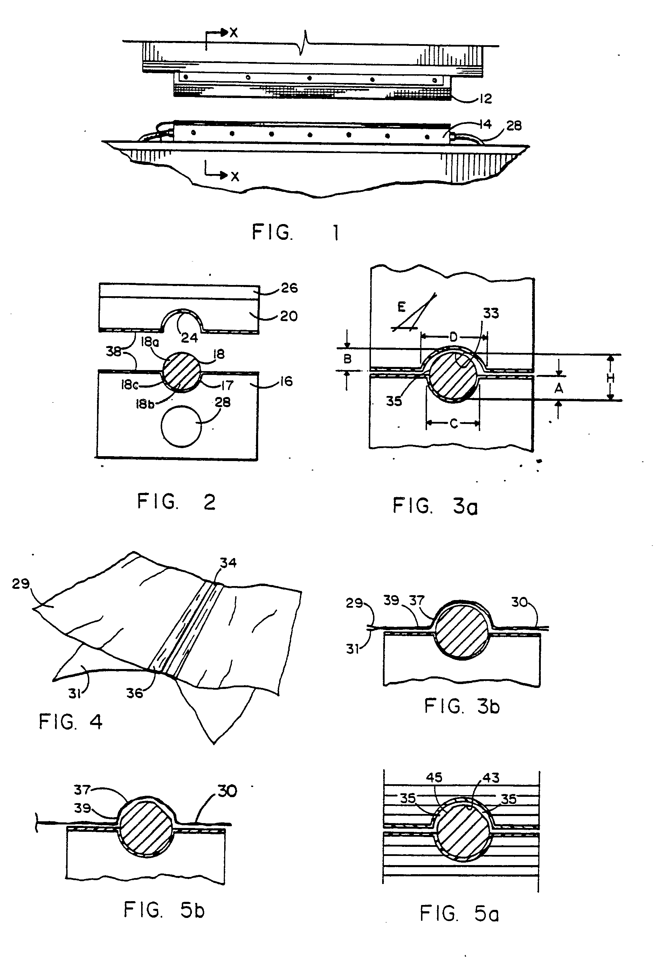

Figure 1 generally shows an arrangement of a press die 10 having an upper portion 12 and a lower portion 14. Figures 2, 3, 5—7, 9 and 13 are sectional views along line x—x of Figure 1. The lower portion 14 includes a support plate 16 for supporting sheets of thermoplastic material thereon, and heat element means 18. The heat element means may be situated in a seat 17 in the support plate 16. The heat element means may comprise, for example, a wire that is spring loaded and held taut. The heat element means has a support portion 18b held within the lower portion 14 (in the seat 17) and an exposed portion 18a. The support portion 18b has a surface area 18c sufficient to be affected by the heating/cooling system 28 so that the heat of the heat element means 18 may be controlled.

The upper portion 12 comprises pressure plate means 20 provided for mating with and applying pressure on the support plate 16 and thereby clamping the material therebetween, and recess means 24 configured to receive the heat element means 18. The recess means may be a relief formed in the pressure plate means. The pressure plate means is preferably made of a slightly resilient material. A backup plate 26 provides rigidity and support for the pressure plate 20. The heating/cooling system 28 adjacent the heat element means 18 controls the heat thereof. A layer of insulating semi-resilient material 38 (Figure 2) may be provided on both the pressure plate and the support plate 16. It is not essential that the insulating layer be present on both the pressure plate and the support plate, providing that only one of the two may suffice.

When the top and the bottom die are in an engaging or mating relationship, the heat element means 18 is received within the recess 24. The recess 24 is configured to apply a substantially crimping pressure at the point 33 and to leave a room or void 35 between the recess and the heat element means. The void 35 is the melt zone means and provides space for the material to melt and be contained to form a seal. Additionally the provision of the melt zone means serves to relieve tension and stress between the seal and the seal-material interface. The crimping zone 33 is a point where greater pressure is applied to cause the thermoplastic material 30 to be crimped. With the configuration of Figures 2 and 3 the resultant seal obtained is shown at Figure 4. Two sheets of thermoplastic material 29 and 31 are joined at the region 36 which represents the seal formed in the melt zone means 35, and separated from each other at 34 which represents the region 33.

From the above it can be seen that the melt zone means is critical in terms of selecting the size and shape of the seal 36 to be formed. Assuming that A is the amount of the heat element means 18 that is retained within the seat 17 as measured from the outer surface of the support plate 16, and B represents the depth of the recess means 24, then a proper selection of A and B together with the dimensions for C and D and the shape of the heat element means 18 and recess means 24 will determine the shape and configuration of the melt zone means E. The triangular melt zone means E in Figure 3a is only an illustration

4

and not a representation of its shape or size. For purposes of this invention, the upper and lower portions 12 and 14 may be manufactured as replaceable and interchangeable die elements having different sizes and shapes. The proper die to be used will depend on the material and the seal desired.

In operation of the device of Figures 1—4, sheets of material 30 to be joined are placed and supported on the support plate 16, with the seam edge to be formed aligned with the heat element means 18. The upper portion 12 is brought into pressing engagement with the lower portion 14. The pressure plate 20 presses on the material 30 and the support plate 16 and clamps the material 30 therebetween. At the same time, the heat element means 18 with the material aligned therewith is received within the recess means 24. The depth to which the heat element is received within the recess means depends on the selection of dimensions for A and B for the particular material 30, the size and shape of the heat element means 18 and the type of seam seal bond desired, the thickness of the material and the compressibility thereof. The recess means 24 is of a dimension to allow slippage of the material 30 over the contour of the heat element means 18 and still maintain a clamping effect thereon. At the point 33 the material 30 may be compressed to a greater degree than in the region of the melt zone means 35. To effect a good clamping, the material outside of the melt zone 35 may be compressed 20 percent to 45 percent from the total material thickness. The maximum recess dimension in the melt zone region may be the total material thickness around the heat element means 18 to a minimum of 50° percent of the material thickness.

The material being considered here has a certain compression factor based on compressibility of the material, the pressure plate means and the resiliency thereof under various loading conditions. The compression factor may be stated as F. For material sheets formed of polyethylene the compression factor is 0.47, for polypropylene it is 0.52, and for rayon acrylic it is 0.42.

Other factors that must be considered in adjusting A, B, C, D and E are the total thickness of the sheets that are situated and confined between the heat element means and the recess means and the thickness of the heat element means. The total thickness (G) would be the sum total of the thickness of each of the sheets that are stacked to be joined. The thickness (H) of the heat element means determine the amount thereof (H-A) that will protrude from the outer surface of the support plate means.

The following formula can be used as a guide to set A, B, F and G:

$$B = H - A + G(F - 1)$$

The temperature of heat element means is set for a certain high and low from its normal temperature at which it is maintained between operations. The pressure applied by the upper portion 12 is controlled and set differently depending on the material involved. A stop clock (not shown) is provided to set the heat time, i.e., the time period for which heat is applied by the heat element means to the material 30. Another clock setting provides the heat dwell time, i.e., the time setting for which the upper portion 12 remains pressed into engagement with the lower portion. The dwell time includes the time period during which heat is applied to the element means.

In Figure 3a, the melt zone means 35 represent the "melting" region where the material portion 37 (see Figures 3b and 5b) will melt or plasticize and be bonded together into a seal. At the region 33, the pressure and heat causes a split or tear bond, as shown at 34 in Figure 4. The importance of proper selection of A, B, C, D and E for a given F, G and H can be appreciated here. If the recess depth B is too much, a tear bond 34 will not form because of lack of the proper crimping pressure at point 33. This setting for B may be utilized where a wide seal is desired over the entire region of the surface of the outer exposed portion of the heat element means 18a. If the recess depth is too little, there is too much drawdown of the material at the melt 37 (see Figures 3b and 5b), which degrades the material interface 39 (see Figure 5b) and may give rise to a "zipper" effect to the bond.

The material 30 is a loose array of spunbonded fibers. The effect of the heat and clamping pressure causes a stress buildup at the interface between the melt and the material, degrading the molecular chain. This degradation is minimized through the design selection of A, B, C, D and E and correlating it to F, G and H as stated above. The design of the heat element means 18 and the recess means 24 takes advantage of changes in physical properties when the material 30 is heated and stretched over the heat element means. In heating and stretching, cross-linking and molecular lineup occurs. The molecular chain bending or slipping across the stretch direction is impeded. This increases the integrity and strength of the seam seal formed.

Fiberglass layer

The surface of the support plate means 16, the pressure plate 20 and recess means 24 may be provided with several layers of insulating material 38, such as Teflon-impregnated fiberglass, Teflon or phenolic laminates. The fiberglass layer 38 acts as an insulator. Additionally, use of coarse insulating material over the pressure plate acts as flow channels to stabilize the melt flow.

Recess and heat element means interchangeable

In Figures 1—3, it can be appreciated that the recess means 24 may be provided in the lower portion 14 and the heat element means may be situated in the upper portion 12. The operation of the apparatus will be the same. The same applies to all the other figures.

Other embodiments

Figure 5a shows another arrangement of the heat element means having crimping surface 43 and sloping sides 45. The sloping sides 45 provide the room for the melt zone means. The operation of Figure 5 would be the same as in Figure 3. Figure 5b shows the region of the melt 37 on the material 30 and the melt-material interface at 39. The operation is the same as Figure 3b.

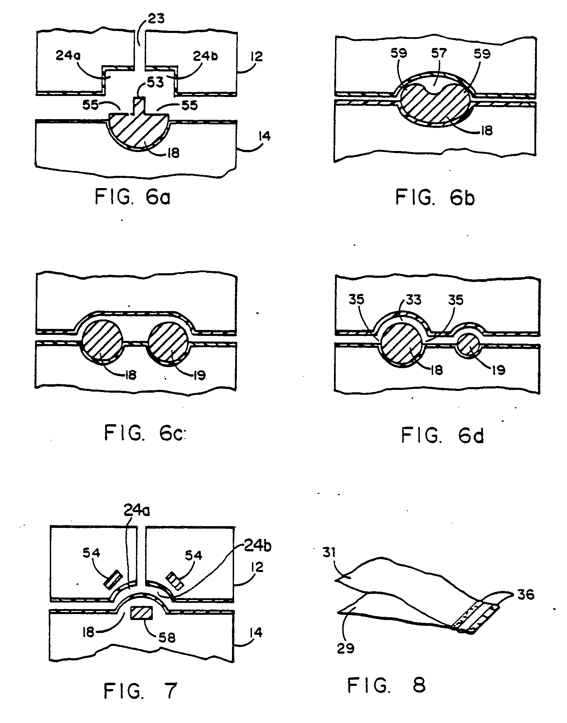

Still another embodiment of the upper and lower portions 12 and 14 is shown in Figure 6a. Here the heat element means 18 comprises lands 55. The recess means 24 is formed as 24a and 24b and a split zone 23. The split zone 23 and planar surface 53 are arranged such that crimping to form a tear bond, like 34 in Figure 4, is avoided.

In operation, the configuration of Figure 6 provides the double-bonds 36 shown in Figure 8. This may be useful for the manufacture of some items where a reinforced or double seal is desired. The double seal may or may not be parallel. The provision of the split recess means 24 allow different pressures to be applied and obtain seals having different characteristics.

Figure 6b shows another arrangement of the heat element means 18 with a channel 57 provided as the non-sealing region. The regions 59 are the sealing regions. The result is the double seal of Figure 8. The configuration of Figure 6b is particularly useful for parallel double seals.

Figure 6c uses dual heat element means 18 and 19. With this configuration dual seals may be obtained by selecting A and B (Figure 3a) to avoid any crimping zone. The two heat element means 18 and 19 may be of different sizes, such as shown in Figure 6d. In Figure 6d, a crimp zone 33 may be provided in element 18 only. The result would be a double seam between the seal formed by heat element means 19 and one of the two melt zone means 35 of heat element means 18.

In Figures 2—6 it has been suggested that the heat element means 18 may comprise a spring-tensioned wire that is directly heated (for example, through electrical means). Figure 7 shows the arrangement where the heat element means 18 is heated through heating means 58, such as electrical wire, imbedded within the lower portion 14. The heating means 58 may also be a port for passage of heating gases. Additionally, the recess means 24a and 24b is provided with heating means 54, which may be an electrically heated wire. The provision of the heating means 54 and 58 may be useful in some applications where greater heat is required within the confines of the heat element means and the recess means 24 from two directions. For example, with some materials because of their thickness or composition, when trying to effect a melt-through, the material closest to the heating element may degrade. This is avoided by using plural heating means. By heating from the top and the bottom, the melt can be better controlled. In Figure 7 the heat of the heat element means 18 and the recess means 24a and 24b may be independently controlled through heat troughs such as shown in Figure 2 for heat element means 18.

Interchangeability

As with Figures 1—3, it should be understood that the heat element means 18 of Figure 7 may be utilized with the recess means of Figures 2—6; and similarly the recess means 24a and 24b of Figure 7 may be utilized and any of the heat element means in Figures 2—6. This interchangeability feature includes other features also.

Single edge joints

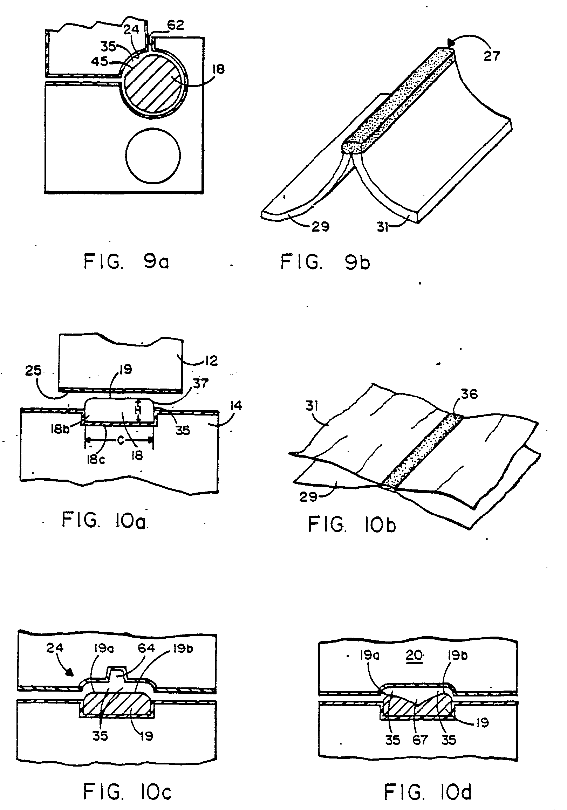

Figures 9a—9b show formation of a single edge joint. The heat element means 18 has a single sloping face 45 to form the melt zone means 35. A stopper edge 62 is provided adjacent the heat element means to engage and position the edge 27 of the material layer 29 and 31. The heat element means 18 and recess means 24 operate in the same manner as described in Figures 1—8. Since only one edge joint is to be formed there is no provision in Figure 9 for forming the tear bond 34 as shown in Figure 4.

Flat ribbon element

Figures 1—9 have shown a circular cross-section for the heat element means. That should not be construed as a limitation of the present invention. For example, Figure 10a shows a flat ribbon as the heat element means 18. Here the outer surface of the ribbon has rounded edges which form the melt zone means 35.

If the device of Figure 10a is used only to form the seal 36, without forming a tear bond 34 (as in Figure 4), then a crimping zone is not essential. Figure 10b shows the bond 36.

It should also be noted that Figure 10a does not show the recess means for receiving the heat element means. The upper portion 12 is shown as a flat member 25 that will compress, confine and hold the material sheets 29 and 31 into engagement with the heat element means. While the heat element means will heat and melt the materials in the seal region 37, the melt zone means serves to accumulate some of the material draw down as well as the region for transition from the seal to the material, i.e., the seal and seal-material interface. The edges 37 are rounded to prevent sharp edges and to assist in the material draw down into the melt zone means. It also provides a smooth transition from the seal heat face 19 to the melt zone means 35.

Thus while in Figures 1—9 the recess means in the upper portion 12 has been shown distinctly, that is only one suggested method of obtaining the melt zone means and one that is particularly useful and applicable when the heat element means is circular.

6

Figure 10c shows use of a flat ribbon to obtain dual seals. Here a recess means 24 is provided and a channel 64 is formed therein representing the region where sealing pressure is not applied on the material 30 and a seal is avoided. Seals are formed in the region 19a and 10b and melt zone 35. The result of the device of Claim 10c is the dual seal of Figure 8.

Figure 10d shows another arrangement of the flat ribbon 19 to obtain dual seals. Here a channel 67 is formed in the ribbon-representing the region where pressure of the pressure plate means 20 is avoided. Seals are formed in the regions 19a and 19b and the melt zone means 35.

Figures 6, 7, 8 and 10 show dual seals. If a seal arrangement requiring more than two seals is desired, the number of split zones of the recess means may be increased, or the number of heat element means may be increased. For example, in Figures 6c—6d, three or four of the heat element means may be used, and in Figure 10c a plurality of channels 64 and 67 in Figure 10d, may be utilized.

Intermittent joints

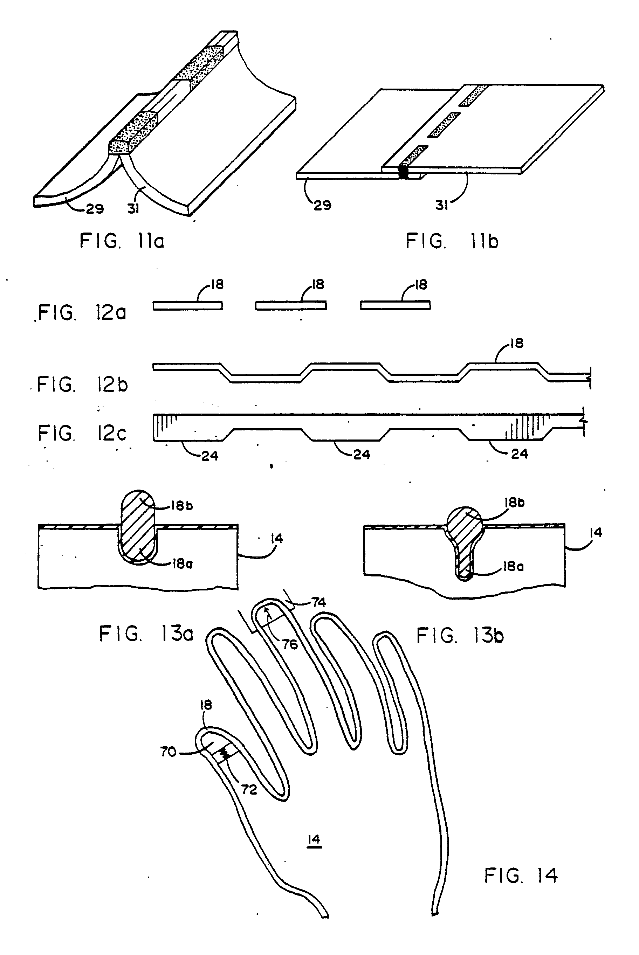

For some purposes it is desirable to provide intermittent joints. For example, Figure 11a shows an intermittent edge joint and Figure 11b shows an intermittent lap joint.

The intermittent joints can be obtained by the arrangement of the heat element means 18 as shown in Figures 12a and 12b. Figure 12a show the heat element means 18 having a certain length and a plurality of these are provided at spaced intervals. The recess means as required by the present invention will be arranged correspondingly. The heat element means may be a circular wire or a flat ribbon.

Figure 11b shows the heat element 18 having idented portions at spaced intervals. The indented portions would be the non-bonding areas.

Instead of indenting the heat element means 18, the recess means 24 may be indented, as shown in Figure 12c.

Lap joints

The bond of the lap joint may be made by increasing the dimension A in Figure 3a, i.e., recessing the heat element means further into the support plate to reduce the draw down of the material during melt. The recess dimension B is reduced, i.e., the relief thereof is reduced correspondingly. The relief of the recess means allows for material slippage, and also applies a small amount of pressure on the heat element means and clamping pressure on the material.

Contoured seals

Figure 13 shows the heat element means having a shape particularly useful where the bond to be formed is not linear. The heat element means is contoured, for example, to form the glove in Figure 14. The heat element means as shown in Figure 13 comprises a support portion 18a which is imbedded within the lower portion 14, and an elongated outer portion 18b having rounded edges. The recess means (not shown) for the heat element means 18b would have a shape to provide a confined melt zone. The provision of the large support portion 18a permits the heat element to be supported within the lower portion 14 while it is contoured to provide different shapes. The rounded edges of outer portion 18b allow for the seal to form around sharp bends.

With the configuration of the heat element means as in Figure 14, two sheets of the material would be sealed with the seam formed in the shape of the contour. The finished product would be a glove. Similar configurations can be utilized for forming garments, envelopes, etc.

As shown in Figure 14, the support plate 14 may be provided with expandable tips 70, urged outwardly by springs 72, at places where the heating element 18 rounds sharp curves in the contour. The reasons for this arrangement is to prevent buckling of the heating element 18 as it expands linearly when heated. Alternatively, a portion 74 of the support plate 14 may be formed of a heat-resistant elastomeric material which is resiliently expandable in the direction of arrow 76.

Glove forming

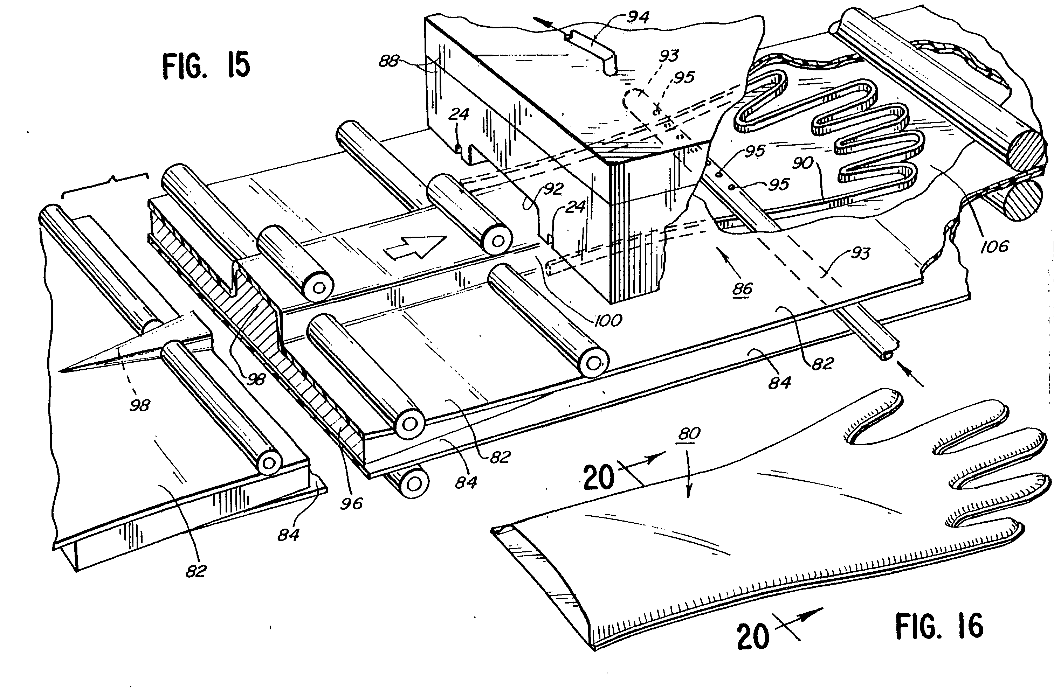

A novel apparatus for forming the glove 80 illustrated in Figure 16 is illustrated in Figure 15. Referring to Figure 15, a top sheet 82 of thermoplastic material and a bottom sheet 84 of thermoplastic material are conveyed, in overlapping relationship, to a mold 86. Mold 86 comprises a pressure means 88 and a heat element 90. Heat element 90 has the longitudinal configuration of the glove to be formed. Pressure means 88 defines a cavity 92, the opening of which faces heat element 90 and also defines recess means 24 as described above in connection with Figure 2.

A vacuum hose 94 is coupled to pressure means 88 and communicates with cavity 92 in order to evacuate the air from cavity 92 during the operation of the mold. In addition, a hollow mandrel 93, defining a number of openings 95, is used to provide an air jet when the mandrel 93 is in place as illustrated. This aids in avoiding wrinkles or foldovers as the top sheet 82 is pulled upwardly by the vacuum into cavity 92. Mandrel 93 reciprocates inwardly and outwardly so that prior to closure of the mold, the mandrel 93 will be moved out of the way.

As illustrated in Figure 15, sheet 84 overlies a tapered member 96. Member 96 has a central portion 98 that is raised so that sheet 82 will be centrally raised as illustrated. However, raised portion 98 terminates at plane 100, upstream of pressure means 88, so that sheets 82 and 84 are completely free of member 96 once they reach the mold.

As illustrated in Figure 15, a number of rollers overlie sheet 82 and also a number of rollers underlie sheet 84.

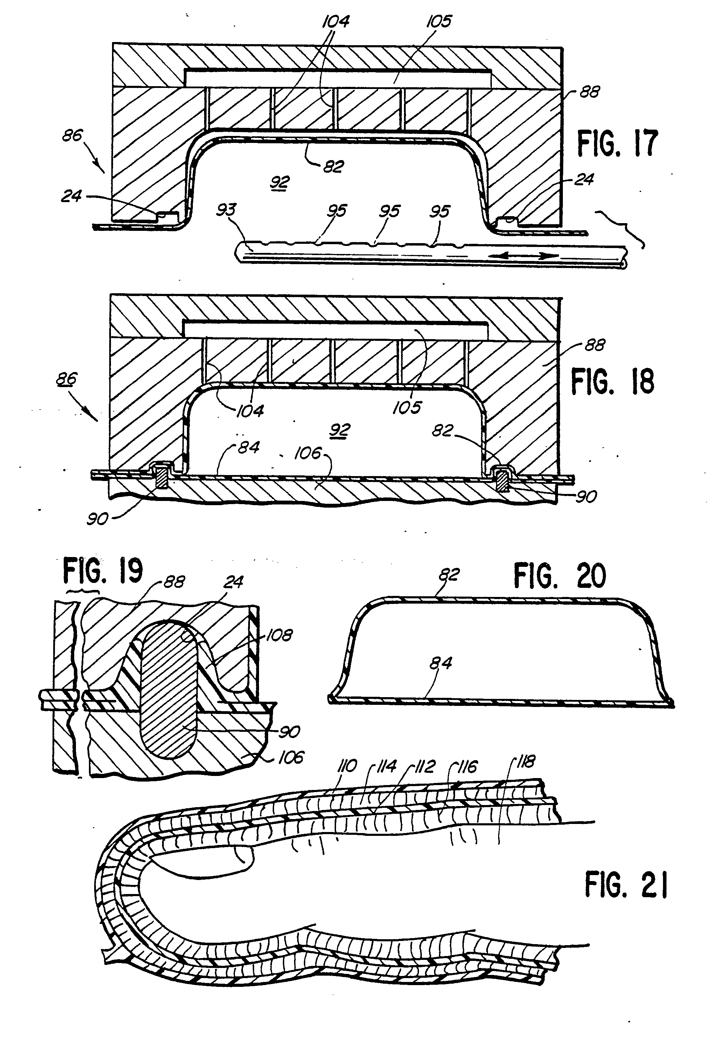

Referring to Figures 17 and 18, it can be seen that pressure means 88 defines a plurality of channels 104 which communicate with cavity 92 and manifold 105 which communicates with vacuum hose 94. Heat element 90 is supported within support means 106 and is aligned with recesses 24 which are defined by pressure means 88.

In the opertion of the apparatus of Figures 15 and 17—19, once the pair of thermoplastic sheets 82 and 84 to be thermobonded are within mold 86, pressure means 88 is moved toward heat element 90. During such movement, a vacuum will be drawn by evacuating air via channels 104 and mandrel 93 will provide an air jet under top sheet 82, so that the top sheet 82 will move upwardly, from its position as illustrated in Figure 17, to a position filling the cavity, as illustrated in Figure 18. Prior to closure of the mold, hollow mandrel 93 is moved out of the mold. Once the top sheet has filled the cavity as illustrated in Figure 18 and the mold is closed, heat element 90 will be energized to melt the thermoplastic sheets in the configuration of the desired glove seam and to force the melted thermoplastic to flow into and be confined within a melt zone volume 108.

As illustrated in Figure 19, recessed wall 24 is in alignment with heat element 90 and a portion of wall 24 and a portion of heat element 90 apply a crimping pressure on the sheets of thermoplastic material while simultaneously leaving a void between other portions of the recessed wall 24 and heat element 90 to form the melt zone volume 108. The crimping pressure will operate to separate the exterior portions of the now bonded thermoplastic sheets. The resulting glove is illustrated in Figures 16 and 20.

It has been discovered that various thermoplastic materials, such as those mentioned above, may readily be used in forming a glove by the apparatus and process of the present invention. It has also been discovered that the use of Tyvek plastic for the glove provides a glove that is highly effective and relatively inexpensive, and that in order to alleviate the perspiration problem that occurs with using a Tyvek plastic glove, it is useful to insert within the Tyvek plastic glove an inner lining formed of a rayon-acetate and manufactured by Chicopee Falls under the trademark Duralace. To this end, the Duralace rayon-acetate inner lining may be manufactured using the apparatus of Figure 15 in the same manner that the Tyvek outer portion of the glove is manufactured. Once the bonding of the inner lining is completed, it may be simply inserted into the Tyvek plastic outer glove. A cross-section of a resulting glove having a Tyvek plastic outer shell 110, an inner liner 112, an air space 114 separating the Tyvek outer shell 110 from the inner liner 112, and an air space 116 between the inner liner 112 and a finger 118, is illustrated in Figure 21. It should be understood that Figure 21 is not to scale, but is for illustrative purposes only.

Operation

With the above device, different types of thermoplastic materials can be bonded together. In some applications adhesive means may be utilized to augment the bond seal. In bonding the thermoplastic material at an edge the bond-material interface is critical for preserving the integrity of the seal bond. Stress at the bond-material is reduced through proper selection of the parameters A, B, C, D and E. The factors that must be considered may be listed as follows:

1. Clamping pressure applied on the material by the upper portion 12. This may be represented as P p.s.i.

2. Heat rise time, i.e., time required for the temperature of the heat element means to rise from its present normal to a given temperature range. This may be represented as $h_t$ seconds.

3. Heat dwell time, i.e., the time period from the beginning of the heat rise time to the end of the cooling time. This may be represented as d seconds. Pressure is kept on during the entire period d.

4. Ambient humidity around the work station. This is represented as H percent. The material itself would be at room temperature and having humidity substantially the same as H.

5. Maximum permissible temperature of the heat element means during the heating state. This may be represented as $t_h$ degrees Fahrenheit and the high of the range of part 2 above.

6. Minimum permissible temperature of the heat element means during the heating stage. This may be represented as $t_1$ degrees Fahrenheit and the low of the range of part 2 above.

With the above factors and the device of the present invention, sheets of thermoplastic material can be joined at a seam with a strong airtight and waterproof seal (even if the material itself is not airtight and waterproof).

In operation, a length of heat element means having a desired cross-sectional configuration is provided. Its length is formed into the shape of the seal to be formed, i.e., linear, curved, shape of a glove, etc. A pressure plate means is provided having recess means, complementarily configured with the heat element means for receiving it. The material is kept at room temperature. The humidity of the material should preferably be substantially similar to the humidity at the work station. The humdity (H) of the work station is maintained between about 27 percent and about 52 percent.

The seam to be formed is positioned and clamped between the heat element means and the recess means. A pressure (P) of between about 20 p.s.i. is applied by the pressure plate means. The heat element means is set at an "initial" temperature (T) of between about 58° Fahrenheit and about 72° Fahrenheit. The temperature of the heat element means is raised to a range between a high ($t_h$) of about 340° Fahrenheit

and a low ($t_1$) of about 125° Fahrenheit. It can be appreciated that the setting of T determines how fast the heat element means can reach the ($t_h-t_1$) range. The rise is temperature of heat is applied for a time period ($h_t$) of between about 0.38 seconds and about 5.51 seconds and a dwell time (d) of between about 0.53 seconds and about 14.01 seconds.

The material may be between about 6 mil (.006 inch) and about 10 mil (.01 inch) thick, and it may be coated or non-coated.

If the material is a Type 1 material fabricated from polyethylene, and made as a sheet about 10 mil thick, for example, like DuPont's 1085, which is coated, the H may be set at about 28, P at about 40, T at about 68, $t_h$ at about 360, $t_1$ at about 150, $h_t$ at about 5.51 and d at about 11.45.

The material may comprise Type 2 material comprising spunbound olefin fibers, such as DuPont's 1444 Tyvek. Tyvek is about 6 mil thick. For this material H may be set at about 29, P at about 60, T at about 69, $t_h$ at about 265, $t_1$ at about 240, $h_t$ at about 4.48 and d at about 9.43. For this material a .032 diameter wire may be utilized as the heat element means, with dimension A shown in Figure 3a being set at .01 inches.

A good seal can also be obtained with the above Tyvek 1444-type material by setting H at about 27, P at about 30, T at about 68, $t_h$ at about 165, $t_1$ at about 130, $h_t$ at the about 2.00 and d at about 14.10. These settings utilize the same 0.32 diameter wire and 0.01 for A as above.

For Tyvek 1444-type material again, H may be set at about 27, P at about 30, T at about 68, $t_h$ at about 175, $t_1$ at about 140, $h_t$ at about 2.16 and d at about 12.13. These settings also use the .032 diameter wire and 0.01 for A.

For Type 3 material, for example, DuPont's Tyvek 1444A-type, H may be set at about 61, P at about 50, T at about 58, $t_h$ at about 200, $t_1$ at about 125, $h_t$ at about 1.08 and d at about 9.01. This uses the same 0.032 diameter wire, but with A being .008 inches.

For Type 4 material, for example, DuPont's Tyvek 1443T-type, H may be set at about 52, P at about 30, T at about 62, $t_h$ at about 250, $t_1$ at about 200, $h_t$ at about 0.61 and d at about 1.61. This uses the .032 diameter wire with A being .008 inches.

The material may comprise Type 5 material comprising polypropylene sheets, similar to Kimberly-Clark's Safeguard and having a thickness of about 10 mil. The Safeguard-type material comprises three layers pressed together. For this material, H may be set about 30, P at about 15, T at about 69, $t_h$ at about 175, $t_1$ at about 125, $h_t$ at about 5.51, and d at about 11.45. Here, an 0.025 diameter wire may be used as the heat element means and A set at 0.008 inches.

For the Type 5 Kimberly-Clark Safeguard-type material, a good seal can also be obtained by setting H at about 50, P at about 20, T at about 68, $t_h$ at about 280, $t_1$ at about 200, $h_t$ at about 0.47, d at about 5.22. A 0.032 diameter wire may be used as the heat element means and A set at 0.01.

The material may comprise Type 6 material, comprising polypropylene sheet similar to Kimberly-Clark's Duraguard, and having 10 mil thickness. For this material, H may be set at about 32, P at about 20, T at about 63, $t_h$ at about 300, $t_1$ at about 200, $h_t$ at about 0.55, d at about 6.25. A 0.032 inch diameter wire may be utilized as the heat element means with A being 0.022 inches.

The material may comprise Type 7 material, comprising rayon and acrylic, similar to Chicopee's Duralace, and about 7 mil thick. For this material H may be set at about 55, P at about 40, T at about 62, $t_h$ at about 340, $t_1$ at about 220, $h_t$ at about 1.65 and d at about 6.62. A 0.032 inch diameter wire may be used with A set at 0.012 inches.

Additionally, for the Duralace-type material, a good seal can be obtained with H set at about 58, P at about 30, T at about 62, $t_h$ at about 220, $t_1$ at about 200, $h_t$ at about 0.38 and d at 0.53. A 0.016 diameter wire may be used as the heat element means with A equal to .003 inches.

The material may comprise Type 8 material comprising polypropylene sheets of single layers, similar to Crown Zellerbach's Celestra, of about 6 mil thickness. For this material H may be set at about 54, T at about 64, $t_h$ at about 220, $t_1$ at about 175, $h_t$ at about 1.15 and d at about 4.6. The heat element means may be .025 diameter wire with A set at .06.

Another type of polypropylene material may be Type 9 material, similar to Evolution #1221056, which is 10 mil thick. For this material H may be set at about 40, T at about 72, $t_h$ at about 180, $t_1$ at about 140, $h_t$ at about .88 and d at about 5.03. The heat element for this may be .03 diameter wire, with A set at .01 inches.

Still another polypropylene material may be DuPont's Typar 3301, whose thickness is about 12 mil. For this material, H may be set at about 42 percent, T at about 71°, $t_h$ at about 230°, $t_1$ at about 150°, $h_t$ at about 1.82 sec, and d at about 5.32 sec.

The above materials and their settings are illustrative of the manner of obtaining good thermobond seals. The following Table I provides an easy reference.

EP 0 200 726 B1

TABLE

| Mat'l No. | Mat'l. thickness | Heat element type & size | Recess depth of heat element inch (A) | Coated — humidity (H) |
|---|---|---|---|---|
| Type 1 (polyethylene) | 10 mil | 1/8" w. ribbon .006 thick | .004 | Yes — 28% |
| Type 2 (polyethylene) | 6 mil | .032 dia. wire | .010 | No — 29% |
| | 6 mil | .032 dia. wire | .010 | No — 27% |
| | 6 mil | .032 dia. wire | .010 | No — 27% |
| Type 3 (polyethylene) | 6 mil | .032 dia. wire | .008 | No — 61% |
| Type 4 (polyethylene) | 6 mil | .030 dia. wire | .008 | No — 52% |
| Type 5 (polypropylene) | 10 mil | .025 dia. wire | .008 | No — 30% |
| | 10 mil | .032 dia. wire | .010 | No — 50% |
| | 10 mil | .032 dia. wire | .010 | No — 40%* |
| Type 6 (polypropylene) | 10 mil | .032 dia. wire | .022 | No — 32% |
| Type 7 (rayon acrylic) | 7 mil | .032 dia. wire | .012 | No — 55% |
| | 7 mil | .016 dia. wire | .003 | No — 58% |
| Type 8 (polypropylene) | 6 mil | .025 dia. wire | .006 | No — 52% |

10

TABLE

| Mat'l No. | Mat'l. thickness | Heat element type & size | Recess depth of heat element inch (A) | Coated humidity (H) |
|---|---|---|---|---|
| Type 9 | 10 mil | .030 dia. wire | .010 | No / 40% |
| Type 10 (polypropylene) | 12 mil | .032 dia. wire | .006 (B) / .015 (A) | No / 42% |

| Mat'l No. | Air (P) press. p.s.i. | Bar temp. of (T) | Temperature setting of | | Stop clock (sec.) | |
|---|---|---|---|---|---|---|
| | | | High (t$_h$) | Low (t$_1$) | Heat h$_t$ | Dwell (d) |
| Type 1 (polyethylene) | 40 | 68° | | | 3.02 | 6.98 |
| Type 2 (polyethylene) | 60 | 69° | 265 | 240 | 4.48 | 9.43 |
| | 30 | 68° | 165 | 130 | 2.00 | 14.10 |
| | 30 | 68° | 175 | 140 | 2.16 | 12.13 |
| Type 3 (polyethylene) | 50 | 58° | 200 | 125 | 1.08 | 9.01 |
| Type 4 (polyethylene) | 30 | 62° | 250 | 200 | 0.61 | 1.61 |
| Type 5 (polypropylene) | 15 | 69° | 175 | 125 | 5.51 | 11.45 |
| | 20 | 68° | 280 | 200 | 0.47 | 5.22 |
| | 40 | 70° | 180 | 140 | 1.62 | 5.47 |
| Type 6 (polypropylene) | 20 | 63° | 300 | 200 | 0.55 | 6.25 |
| Type 7 (rayon acrylic) | 40 | 62° | 340 | 220 | 1.65 | 6.62 |
| | 30 | 62° | 220 | 200 | 0.38 | 0.53 |
| Type 8 (polypropylene) | 40 | 64° | 220 | 175 | 1.15 | 4.6 |
| Type 9 | 15—30 | 72 | 180 | 140 | 0.88 | 5.03 |
| Type 10 (polypropylene) | 45 | 71° | 230° | 150° | 1.82 | 5.32 |

For other materials not noted above, the proper size and shape of the melt zone means may be selected and the parameters of H, P, T, t$_h$, t$_1$, h$_t$ and d adjusted within the broad range of the present invention and using the device of the present invention. It should be noted that the above method may be used also for fabrics that contain only a percentage of thermoplastic material.

**Claims**

1. A device for sealing thermoplastic materials comprising pressure applying means (20) for applying pressure on the thermoplastic material to be sealed, support means (16) for supporting the thermoplastic material to be sealed, a heat element (18) for forming the seal, said pressure applying means and said heat element being normally spaced to permit introduction of thermoplastic material therebetween but being operable for pressure engagement to provide thermal sealing of the material, and means for energizing said heat element for providing heat to the thermoplastic sheets while said pressure applying means and said heat element are in pressure engagement characterised in that at least one of said pressure applying means (20) and heat element (18) has a recessed wall (24) and the other of said pressure applying means and heat element has a non-planar surface, (18a) whereby a confined melt zone volume (35) is defined between the pressure applying means and the heat element in the pressure engagement position and melted thermoplastic is forced to flow into and be confined within the melt zone.

2. A device according to Claim 1, in which the pressure applying means (20) and the heat element (18) are configured so that a portion of the recessed wall (24) and a portion (33) of the heat element will apply a crimping pressure on the thermoplastic material and simultaneously leave a void between other portions of the recessed wall and the heat element to form the melt zone volume (35).

3. A device according to Claim 1 or 2, wherein said recessed wall (24) is provided in said pressure applying means (20) for receiving said heat element (118) and confining said material therebetween.

4. A device according to Claim 1, 2 or 3, including means for molding said heat element taut.

5. A device according to any preceding claim, wherein said heat element (18) is curvilinear and shaped for forming a garment or glove.

6. A device according to Claim 5 including a mould (86) having a clarity (92) facing the heating element, and means for evacuating air from the cavity to draw a portion of one of the thermoplastic sheets (82) within the curvilinear seating element into the cavity.

## Patentansprüche

1. Vorrichtung zum Verschweißen thermoplastischer Materialien, mit Druckbeaufschlagungsmitteln (20) zum Anlegen von Druck an das zu verschweißende thermoplastische Material, Stützmitteln (16) zum Abstützen des zu verschweißenden thermoplastischen Materials, einem Heizelement (18) zum Ausbilden der Verschweißung, wobei die Druckbeaufschlagungsmittel und das Heizelement zungunsten einer Einführung thermoplastischen Materials zwischen Mitteln und Element normalerweise voneinander beabstandet und darüberhinaus zungunsten der thermischen Verschweißung des Materials einer Druckeinwirkung unterwerfbar sind, und Mitteln zum Energieversorgen des Haizelements zugunsten einer Wärmezufuhr an die thermoplastischen Lagen, während die Druckbeaufschlagungsmittel und das Heizelement der Druckeinwirkung unterworfen sind, dadurch gekennzeichnet, daß zumindest die Druckbeaufschlagungsmittel (20) oder das Heizelement (18) eine zurückgesetzte Wandung (24) und das andere dieser Mittel/Teile eine nichtplanare Fläche (18a) aufweist, wobei zwischen den der Druckeinwirkung unterworfenen Druckbeaufschlagungsmitteln und dem Heizelement ein begrenztes Schmelzzonenvolumen (35) besteht, und wobei geschmolzenes Thermoplastmaterial zwangsweise in die Schmelzzone hineinfließt und in dieser eingeschlossen wird.

2. Vorrichtung nach Anspruch 1, bei welcher die Druckbeaufschlagungsmittel (20) und das Heizelement (18) derart konfiguriert sind, daß ein Abschnitt der zurückgesetzten Wandung (24) und ein Abschnitt (33) des Heizelements einen Faltverformdruck auf das thermoplastische Material ausüben und gleichzeitig zwischen anderen Abschnitten der zurückgesetzten Wandung und des Heizelements zugunsten einer Ausbildung des Schmelzzonenvolumens (35) eine Lücke belassen.

3. Vorrichtung nach Anspruch 1 oder 2, bei welcher die zurückgesetzte Wandung (24) in den Druckbeaufschlagungsmitteln (20) zugunsten einer Aufnahme des Heizelements (18) sowie zum Einschließen der Materials dazwischen vorgesehen ist.

4. Vorrichtung nach Anspruch 1, 2 oder 3, mit Mitteln zum Gespannthalten des Heizelements.

5. Vorrichtung nach einem der vorangehenden Ansprüche, bei welcher das Heizelement (18) krummlinig sowie zugunsten der Ausbildung eines Kleidungsstücks oder Handschuhs gestaltet ist.

6. Vorrichtung nach Anspruch 5, mit einer Form (86), die einen dem Heizelement gegenüberliegenden Hohlraum (92) aufweist, und mit Mitteln zum Abziehen von Luft auf dem Hohlraum zugunsten eines Hineinziehens eines Abschnitts von einer der thermoplastischen Lagen (82) innerhalb des krummlinigen Heizelements in den Hohlraum.

## Revendications

1. Appareil pour sceller des matériaux thermoplastiques comprenant un moyen (20) pour appliquer une pression sur le matériau thermoplastique à sceller, un moyen de support (16) pour soutenir le matériau à sceller, un élément chauffant (18) pour former le joint scellé, ledit moyen appliquant la pression et ledit élément chauffant étant normalement espacés pour permettre d'introduire entre eux le matériau thermoplastique mais pouvant être actionnés pour être pressés l'un contre l'autre pour réaliser le thermocollage du matériau, et des moyens pour fournir de l'énergie audit élément chauffant pour apporter de la chaleur aux feuilles thermoplastiques pendant que ledit moyen d'application de pression et ledit élément chauffant sont pressés l'un contre l'autre, caractérisé en ce qu'au moins un dudit moyen appliquant la pression (20) et dudit élément chauffant (18) a une paroi concave (24) et en ce que l'autre desdits éléments, à savoir le moyen appliquant la pression et l'élément chauffant, a une surface non plane (18a), grâce à quoi un volume confiné (35) de zone de fusion est délimité entre le moyen appliquant la pression et l'élément chauffant étant en position d'engagement par pression, et du thermoplastique fondu est forcé de s'écouler dans la zone de fusion et d'y être confiné.

2. Appareil selon la revendication 1, dans lequel le moyen (20) appliquant la pression et l'élément chauffant (18) ont une configuration telle qu'une partie de la paroi concave (24) et une partie (33) de l'élément chauffant appliquent une pression de pincement sur le matériau thermoplastique tout en laissant un vide entre d'autres parties de la paroi concave et de l'élément chauffant pour former le volume (35) de zone de fusion.

3. Appareil selon la revendication 1 ou 2, dans lequel ladite paroi concave (24) est ménagée dans ledit moyen (20) appliquant la pression pour recevoir ledit élément chauffant (18) et pour confiner ledit matériau entre ceux-ci.

4. Appareil selon l'une des revendications 1, 2 ou 3, comportant des moyens pour maintenir tendu ledit élément chauffant.

5. Appareil selon l'une quelconque des revendications précédentes, dans lequel ledit élément chauffant (18) est curviligne et est conformé pour former un vêtement ou un gant.

6. Appareil selon la revendication 5, comprenant un moule (86) ayant une cavité (92) faisant face à l'élément chauffant, et un moyen pour aspirer l'air hors de la cavité pour attirer une partie d'une des feuilles thermoplastiques (82) dans l'élément d'appui curviligne dans la cavité.

FIG. 1

FIG. 2

FIG. 3a

FIG. 4

FIG. 3b

FIG. 5b

FIG. 5a

FIG. 6a

FIG. 6b

FIG. 6c

FIG. 6d

FIG. 7

FIG. 8

FIG. 9a

FIG. 9b

FIG. 10a

FIG. 10b

FIG. 10c

FIG. 10d

FIG. 11a

FIG. 11b

FIG. 12a

FIG. 12b

FIG. 12c

FIG. 13a

FIG. 13b

FIG. 14

**FIG. 15**

**FIG. 16**

FIG. 17

FIG. 18

FIG. 19

FIG. 20

FIG. 21